# EUROPÄISCHE PATENTSCHRIFT

(11) **EP 1 373 761 B1**
(45) Veröffentlichungstag und Bekanntmachung des Hinweises auf die Patenterteilung: **29.09.2004**
(21) Anmeldenummer: 02708369.0
(22) Anmeldetag: 27.03.2002
(51) Int. Cl.: F16H 37/04

(54) **MEHRSTUFENGETRIEBE**
MULTI-SPEED TRANSMISSION
ENGRENAGE REDUCTEUR A PLUSIEURS ETAGES

(30) Priorität: 30.03.2001 DE 10115986
(43) Veröffentlichungstag der Anmeldung: 02.01.2004
(73) Patentinhaber: ZF FRIEDRICHSHAFEN Aktiengesellschaft, 88038 Friedrichshafen (DE)
(72) Erfinder: BIERMANN, Eberhard, 88214 Ravensburg (DE)
(86) Internationale Anmeldenummer: PCT/EP2002/003437
(87) Internationale Veröffentlichungsnummer: WO 2002/079672

(56) Entgegenhaltungen:
- US-A- 5 106 352

## Beschreibung

Die vorliegende Erfindung betrifft ein Mehrstufengetriebe nach dem Oberbegriff des Patentanspruchs 1.

In der gattungsgemäßen US 5,106,352 A sind mehrere Getriebeschemata für Automatgetriebe mit einem nicht,schaltbaren Vorschaltsatz und einem schaltbaren Haupradsatz bekannt geworden, bei dem durch selektives Schalten von fünf Schaltelementen insgesamt sechs Vorwärtsgänge ohne Gruppenschaltung schaltbar sind. Der Hauptradsatz ist dabei als schaltbares Zweisteg-Vierwellen-Getriebe mit zwei gekoppelten Planetenradsätzen ausgebildet. Der nicht schaltbare Vorschaltsatz kann als Einsteg-Planetengetriebe oder als Zweiwellen-Getriebe mit zwei festen Stirnradpaaren ausgebildet sein.

Ist der Vorschaltsatz als nicht schaltbares Einsteg-Planetengetriebe ausgebildet, so schlägt die US 5,106,352 A vor, die Antriebswelle des Automatgetriebes fest mit diesem Einsteg-Planetengetriebe zu verbinden und die so im Vorschaltsatz erzeugte Drehzahl über verschiedene Schaltelemente auf Radsatzkomponenten des Hauptradsatzes selektiv zu übertragen. Weiterhin ist die Antriebswelle über ein Schaltelement mit dem Hauptradsatz verbindbar. Ist der Vorschaltsatz als Zweiwellen-Getriebe mit konstanten Stirnradstufen ausgebildet, so schägt die US 5,106,352 A vor, die Antriebswelle fest mit je einem Stirnrad von zwei Stirnradpaaren zuverbind. Antriebswelle und Abtriebswelle des Automatgetriebes sind also zueinander nicht koaxial. Durch diese beiden Stirnradpaare werden zwei Drehzahlen erzeugt, welche über verschiedene Schaltelement auf Radsatzkomponenten des Hauptradsatzes übertragbar sind.

In der älteren DE-P 199 49 507.4 der Anmelderin werden mehrere Getriebeschematas für ein automatisches Mehrstufengetriebe mit verschiedenen Kombinationen gekoppelter Planetenradsätze beschrieben. Durch geeignete Anbindung einer nicht schaltbaren Planetenradsatzkombination in einem Vorschaltsatz an eine schaltbare Planetenradsatzkombination in einem Nachschaltsatz können jeweils mindestens sieben Vorwärtsgänge ohne Gruppenschaltung geschaltet werden. Die Anzahl der schaltbaren Vorwärtsgänge ist dabei mindestens um zwei größer als die Anzahl der Schaltelemente. Vorschaltsatz und Nachschaltsatz sind stets koaxial zueinander angeordnet.

Auch die DE-P 199 49 507.4 schlägt dabei vor, den schaltbaren Nachschaltsatz als Zweisteg-Vierwellen-Getriebe auszubilden. Unter Zweisteg-Vierwellen-Getriebe ist hierbei eine Anordnung von zwei einzelnen mechanisch gekoppelten Einsteg-Planetenradsätzen zu verstehen, bei denen die gekoppelte Einheit infolge einer zweifachen Bauteilbindung vier sogenannte "freie Wellen" aufweist, wobei eine "Welle" ein Sonnenrad, ein Hohlrad oder auch ein Steg eines Planetenradsatzes sein kann.

Die Aufgabe der vorliegenden Erfindung besteht nun darin, ausgehend vom genannten Stand der Technik ein Mehrstufengetriebe mit nicht-koaxialer Anordnung von Antriebsund Abtriebswelle und wenigstens sieben ohne Gruppenschaltung schaltbaren Vorwärtsgängen hinsichtlich Bauraum zu entwickeln, mit geringem Bauaufwand, günstiger Gangstufung und großer Spreizung.

Diese Aufgabe wird durch ein die Merkmale des Hauptanspruchs aufweisendes Mehrstufengetriebe gelöst.

Ausgehend vom gattungsgemäßen Stand der Technik der US 5,106,352 A, weist das Mehrstufengetriebe eine Antriebswelle und eine dazu nicht koaxial angeordnete Abtriebswelle auf. Mit der Antriebswelle ist ein nicht schaltbarer Vorschaltsatz verbundenen, der als Zweiwellen-Getriebe mit zwei konstanten Stirnradstufen ausgeführt ist. Mit der Abtriebswelle ist ein schaltbarer Hauptradsatz verbundenen, der als Zweisteg-Vierwellen-Getriebe mit zwei gekoppelten, schaltbaren Planetenradsätzen ausgebildet ist.

Die beiden Stirnradstufen des Vorschaltsatz erzeugen je eine Ausgangsdrehzahl, die über verschiedene Schaltelemente durch deren selektives Schließen auf einzelne Komponenten der Planetenradsätze des Hauptradsatzes übertragbar sind. Selbstverständlich können in verschiedenen Ausgestaltungen des Hauptradsatzes unterschiedliche Bauteilekoppelungen innerhalb der Planetenradsätze vorgesehen sein.

Erfindungsgemäß weist das Mehrstufengetriebe sechs Schaltelemente auf, durch deren selektives Schließen insgesamt acht Vorwärtsgänge und zwei Rückwärtsgänge schaltbar sind. Im Unterschied zum gattungsgemäßen Stand der Technik ist also ein zusätzliches Schaltelement vorgesehen, wodurch zwei zusätzliche Vorwärtsgänge geschaltet werden können. In jedem geschalteten Gang sind dabei zwei Schaltelemente geschaltet. Beim Umschalten von einem Gang in den nächsten wird dabei lediglich ein Schaltelement abgeschaltet und ein weiteres Schaltelement zugeschaltet, wodurch schaltqualitätskritische Gruppenschaltungen, bei denen mehrere Schaltelemente gleichzeitig zu- bzw. abgeschaltet werden müssen, vermieden werden.

Die erste freie Welle des Hauptradsatzes ist mit einem Schaltelement verbunden, über welches die erste Welle des Hauptradsatzes mit der zweiten Stirnradstufe des Vorschaltsatzes verbindbar ist. Erfindungsgemäß ist die zweite freie Welle des Hauptradsatzes mit drei Schaltelementen verbunden, über,welche die zweite Welle des Hauptradsatzes wahlweise mit der ersten oder mit der zweiten Stirnradstufe des Vorschaltsatzes verbindbar oder festsetzbar ist. Die dritte freie Welle des Hauptradsatzes ist mit zwei Schaltelementen verbunden, über welche die dritte Welle des Hauptradsatzes mit der ersten Stirnradstufe des Vorschaltsatzes verbindbar oder festsetzbar ist. Die vierte freie Welle des Hauptradsatzes ist mit der Abtriebswelle des Getriebes verbunden.

Vorzugsweise sind die erste und zweite freie Welle des Hauptradsatzes jeweils ein Zentralrad, also ein Sonnenrad oder ein Hohlrad. Die dritte freie Welle des Hauptradsatzes ist vorzugsweise ein Steg.

Gegenüber dem gattungsgemäßen Stand der Technik weist das erfindungsgemäße Mehrstufengetriebe also auf der zweiten Welle des als Zweisteg-Vierwellen-Getriebe ausgebildeten Hauptradsatzes ein zusätzliches Schaltelement auf.

In besonders vorteilhafter Weise ermöglicht diese Ausbildung kompakte, bauraumsparende achtgängige Mehrstufengetriebe für Anwendungen mit nicht-koaxialem An- und Abtrieb. Das solchermaßen ausgebildete erfindungsgemäße Mehrstufengetriebe eignet sich insbesondere für Kraftfahrzeuge mit quer zur Fahrtrichtung eingebautem Antriebsmotor ("Front-Quer-Antrieb", "Heck-Quer-Antrieb") oder mit längs zur Fahrtrichtung eingebautem Antriebsmotor und Front- bzw. Heck-Antrieb.

Aus den Unteransprüchen gehen bevorzugte Ausgestaltungen der Erfindung hervor.

Im folgenden wird die Erfindung anhand der in den Figuren dargestellten Ausführungsformen eines Mehrstufengetriebes beispielhaft erläutert. Es zeigen:
- Figuren 1A und 1B eine erste Ausführungsform eines erfindungsgemäßen Mehrstufengetriebes;
- Figuren 2A und 2B eine zweite Ausführungsform eines erfindungsgemäßen Mehrstufengetriebes; und
- Figuren 3A und 3B eine dritte Ausführungsform eines erfindungsgemäßen Mehrstufengetriebes.

In den Figuren mit Index A sind entsprechend der jeweiligen Ausführungsform das Getriebeschema des Mehrstufengetriebes dargestellt. Die Figur mit Index B zeigt die der Ausführungsform zugehörigen Schaltlogik, beispielhafte Übersetzungen der einzelnen Gänge, Gangstufung, Getriebespreizung und Standübersetzungen der einzelnen Planetenradsätze und Stirnradstufen.

In allen Figuren ist mit 1 eine mit einer Eingangsdrehzahl n rotierende Antriebswelle und mit 2 eine mit einer Abtriebsdrehzahl nab rotierende Abtriebswelle des Mehrstufengetriebes bezeichnet. ST1 und ST2 bezeichnen eine erste und eine zweite Stirnradstufe des Vorschaltsatzes, jeweils mit einem eingangsseitigen Stirnrad S11, S21, sowie jeweils mit einem ausgangsseitigen Stirnrad S12, S22. Ausgangsseitig erzeugt der Vorschaltsatz also zwei verschiedene Drehzahlen, nämlich die Ausgangsdrehzahl n1, mit der das ausgangsseitige Stirnrad S12 der ersten Stirnradstufe ST1 rotiert, und die Ausgangsdrehzahl n2, mit der das ausgangsseitige Stirnrad S22 der zweiten Stirnradstufe ST2 rotiert. Mit RS1 und RS2 sind ein erster und ein zweiter Planetenradsatz des Hauptradsatzes bezeichnet. Die bauteilseitige Koppelung der Planetenradsatzkomponeneten innerhalb des Hauptradsatzes ist in den dargestellten beispielhaften Ausführungsformen unterschiedlich. Es sind sechs Schaltelemente A, B, C, D, E, F vorgesehen, wobei die Schaltelemente A, B, E, F stets als Kupplung und die Schaltelemente C, D stets als Bremse ausgebildet sind.

Die erste freie Welle des Hauptradsatzes ist mit der Kupplung A verbunden ist und rotiert bei geschlossener Kupplung A mit Ausgangsdrehzahl n2 der zweiten Stirnradstufe ST2. Die zweite freie Welle des Hauptradsatzes ist mit der Kupplung B, der Bremse C und der Kupplung F verbunden, rotiert bei geschlossener Kupplung B mit Ausgangsdrehzahl n2 der ersten Stirnradstufe ST2, steht bei geschlossener Bremse C still, und rotiert bei geschlossener Kupplung F mit Ausgangsdrehzahl n1 der ersten Stirnradstufe ST1. Die dritte freie Welle des Hauptradsatzes ist mit der Bremse D und der Kupplung E verbunden, steht bei geschlossener Bremse D still und rotiert bei geschlossener Kupplung E mit Ausgangsdrehzahl n1 der ersten Stirnradstufe ST1. Die vierte freie Welle des Hauptradsatzes ist mit der Abtriebswelle 2 verbunden ist und rotiert mit Abtriebsdrehzahl nab.

Erfindungsgemäß ist die zweite freie Welle des Hauptradsatzes also stets durch Schaltmöglichkeit des gegenüber dem gattungsgemäßen Stand der Technik zusätzlichen sechsten Schaltelementes F wahlweise mit beiden ausgangsseitigen Stirnrädern S12, S22 (Ausgangsdrehzahlen n1, n2) der beiden Stirnradstufen ST1, ST2 verbindbar, und nicht nur mit dem ausgangsseitigen Stirnrad S22 (Ausgangsdrehzahl n2) der zweiten Stirnradstufen ST2.

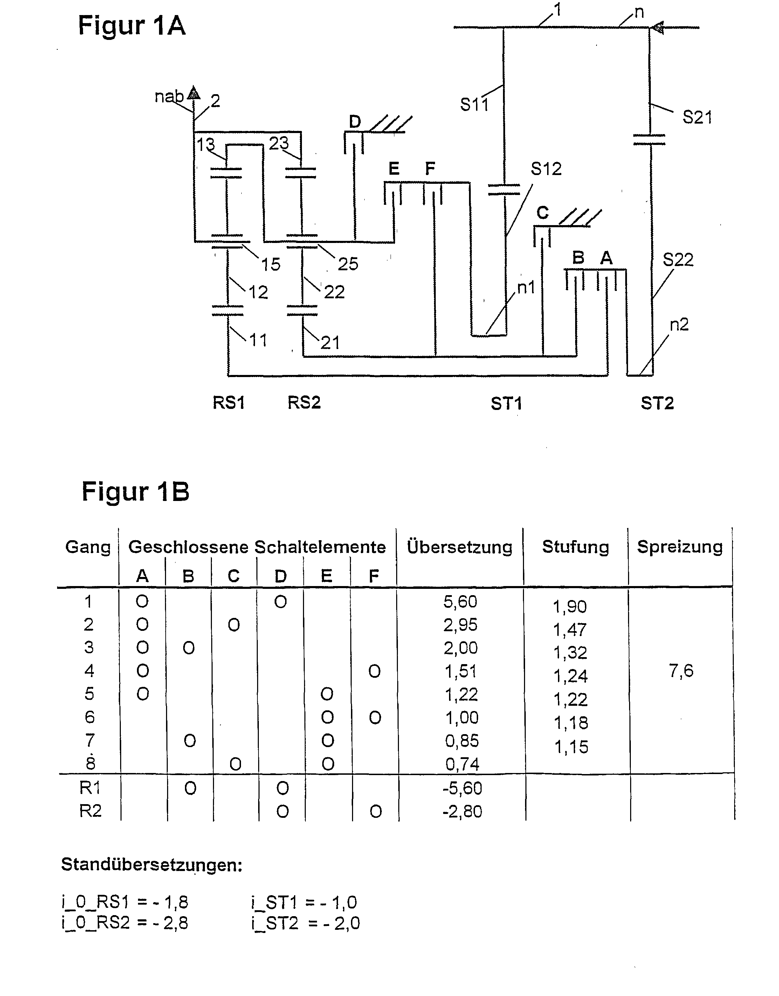

Figur 1A zeigt nun nun das Getriebeschema einer beispielhaften ersten Ausführungsform eines erfindungsgemäßen Mehrstufengetriebes. Die Antriebswelle 1 (Drehzahl n) ist fest mit dem eingangsseitigen Stirnrad S11 der ersten Stirnradstufe ST1 und fest mit dem eingangsseitigen Stirnrad S21 der zweiten Stirnradstufe ST2 verbunden. Beide Planetenradsätze RS1, RS2 sind als Minus-Getriebe ausgebildet und umfassen jeweils ein Sonnenrad 11, 21, ein Hohlrad 13, 23, sowie einen Steg 15, 25 mit Planetenrädern 12, 22.

Das Sonnenrad 11 des ersten Planetenradsatzes RS1 bildet die erste freie Welle des Hauptradsatzes und ist über das erste Schaltelement A mit dem ausgangsseitigen Stirnrad S22 der zweiten Stirnradstufe ST2 verbindbar. Ist die Kupplung A geschlossen, so rotiert das Sonnenrad 11 mit der Drehzahl n2, die sich aus der Eingangsdrehzahl n der Antriebswelle 1 und dem Übersetzungsverhältnis der zweiten Stirnradstufe i_ST1 errechnet.

Das Sonnenrad 21 des zweiten Planetenradsatzes RS2 bildet die zweite freie Welle des Hauptradsatzes und ist über das zweite Schaltelement B mit dem ausgangsseitigen Stirnrad S22 der zweiten Stirnradstufe ST2 verbindbar, über das dritte Schaltelement C festsetzbar, sowie über das sechste Schaltelement F mit dem ausgangsseitigen Stirnrad S12 der ersten Stirnradstufe ST1 verbindbar. Ist die Kupplung B geschlossen, so rotiert das Sonnenrad 21 mit der Drehzahl n2, die sich aus der Eingangsdrehzahl n der Antriebswelle 1 und dem Übersetzungsverhältnis der zweiten Stirnradstufe i_ST2 errechnet. Ist die Bremse C geschlossen, so steht das Sonnenrad 21 still. Ist die Kupplung F geschlossen, so rotiert das Sonnenrad 21 mit der Drehzahl n1, die sich aus der Eingangsdrehzahl n der Antriebswelle 1 und dem Übersetzungsverhältnis der ersten Stirnradstufe i_ST1 errechnet.

Das Hohlrad 13 des ersten Planetenradsatzes RS1 und der Steg 25 des zweiten Planetenradsatzes RS2 sind gekoppelt und bilden die dritte freie Welle des Hauptradsatzes, sind über das vierte Schaltelement D festsetzbar, sowie über das fünfte Schaltelement E mit dem ausgangsseitigen Stirnrad S12 der ersten Stirnradstufe ST1 verbindbar. Ist die Bremse D geschlossen, so stehen Hohlrad 13 und angekoppelter Steg 25 still. Ist die Kupplung E geschlossen, so rotieren Hohlrad 13 und angekoppelter Steg 25 mit der Drehzahl n1, die sich aus der Eingangsdrehzahl n der Antriebswelle 1 und dem Übersetzungsverhältnis der ersten Stirnradstufe i_ST1 errechnet.

Das Hohlrad 23 des zweiten Planetenradsatzes RS2 und der Steg 15 des ersten Planetenradsatzes RS1 sind gekoppelt und bilden die vierte freie Welle des Hauptradsatzes und sind mit der Abtriebswelle 2 des Mehrstufengetriebes verbunden.

Für die Drehzahlen an den Getriebewellen und Schaltelementen gilt folgendes:
1. Die Ausgangsdrehzahl n1 der ersten Stirnradstufe ST1 ist gleich der Eingangsdrehzahl n der Antriebswelle 1 dividiert durch das Übersetzungsverhältnis i_ST1 der ersten Stirnradstufe ST1;
2. die Ausgangsdrehzahl n2 der zweiten Stirnradstufe ST2 ist gleich der Eingangsdrehzahl n der Antriebswelle 1 dividiert durch das Übersetzungsverhältnis i_ST2 der zweiten Stirnradstufe ST2;
3. die Drehzahl an den Schaltelementen A und B ist gleich der Ausgangsdrehzahl n2 der zweiten,Stirnradstufe ST1;
4. die Drehzahl an den Schaltelementen E und F ist gleich der Ausgangsdrehzahl n1 der ersten Stirnradstufe ST2;
5. die Drehzahl am geschalteten Schaltelement C ist null;
6. die Drehzahl am geschalteten Schaltelement D ist null;
7. die Drehzahl an der Welle, welche die Schaltelemente B, C, F mit einem Zentralrad des zweiten Planetenradsatzes RS2 verbindet, ist bei geschalteten Schaltelementen A und D negativ gegenüber der bei betätigtem Schaltelement B vorliegenden Drehzahl;
8. die Drehzahl an der Welle, welche die Schaltelemente B, C, F mit dem Zentralrad des zweiten Planetenradsatzes RS2 verbindet, ist bei geschaltetem Schaltelement B größer als null;
9. die Drehzahl an der Welle, welche die Schaltelemente B, C, F mit dem Zentralrad des zweiten Planetenradsatzes RS2 verbindet, ist bei geschaltetem Schaltelement F größer als die bei betätigtem Schaltelement B vorliegenden Drehzahl;
10. die Drehzahl an der Welle, welche das Schaltelement A mit einem Zentralrad des ersten Planetenradsatzes RS1 verbindet, ist bei geschalteten Schaltelementen E und F größer als die bei betätigtem Schaltelement A vorliegenden Drehzahl;
11. die Drehzahl an der Welle, welche das Schaltelement A mit dem Zentralrad des ersten Planetenradsatzes RS1 verbindet, ist bei geschalteten Schaltelementen E und B größer als die bei betätigten Schaltelementen E und F vorliegenden Drehzahl;
12. die Drehzahl an der Welle, welche das Schaltelement A mit dem Zentralrad des ersten Planetenradsatzes RS1 verbindet, ist bei geschalteten Schaltelementen E und C größer als die bei betätigten Schaltelementen E und B vorliegenden Drehzahl;
13. die Drehzahl an der Welle, welche das Schaltelement A mit dem Zentralrad des ersten Planetenradsatzes RS1 verbindet, ist bei geschalteten Schaltelementen D und B negativ gegenüber der bei betätigtem Schaltelement A vorliegenden Drehzahl;
14. die Drehzahl an der Welle, welche das Schaltelement A mit dem Zentralrad des ersten Planetenradsatzes RS1 verbindet, ist bei geschalteten Schaltelementen D und F kleiner als die bei betätigten Schaltelementen D und B vorliegenden Drehzahl;
15. die Drehzahl an der Welle, welche die Schaltelemente D, E mit einem Steg des zweiten Planetenradsatzes RS2 verbindet, ist bei geschalteten Schaltelementen A und B größer als die bei betätigten Schaltelementen A und C vorliegenden Drehzahl;
16. die Drehzahl an der Welle, welche die Schaltelemente D, E mit dem Steg des zweiten Planetenradsatzes RS2 verbindet, ist bei geschalteten Schaltelementen A und F größer als die bei betätigten Schaltelementen A und B vorliegenden Drehzahl;
17. die Drehzahl an der Welle, welche die Schaltelemente D, E mit dem Steg des zweiten Planetenradsatzes RS2 verbindet, ist bei geschaltetem Schaltelementen E größer als die bei betätigten Schaltelementen A und F vorliegenden Drehzahl.

Wie in Figur 1B gezeigt, sind bei der ersten Ausführungsform eines erfindungsgemäßen Mehrstufengetriebes insgesamt acht Vorwärtsgänge und zwei Rückwärtsgänge ohne komfortkritische Gruppenschaltung schaltbar, bei vergleichsweise großer Spreizung und sehr harmonischer Stufung. In vorteilhafter Weise ist die Anfahrübersetzung im ersten Vorwärtsgang und auch im ersten Rückwärtsgang groß, sodaß sich bei einer Anwendung als PKW-Automatgetriebe beispielsweise ein Drehmomentwandler als Anfahrelement einsparen läßt. Der siebte und achte Vorwärtsgang ist antriebsdrehzahlsenkend als Overdrive-Gang ausgeführt. Die nicht koaxiale Bauteilanordnung von Antriebs- und Abtriebswelle und der kompakte Aufbau des Mehrstufengetriebes ist in bekannter Weise vorteilhaft für eine Anwendung in Kraftfahrzeugen mit quer zur Fahrtrichtung angeordnetem Antriebsmotor.

Wie ebenfalls in Figur 1B gezeigt, rotiert das ausgangsseitige Stirnrad S12 der ersten Strirnradstufe ST1 (Drehzahl n1) bei der ersten beispielhaften Ausführungsform eines erfindungsgemäßen Mehrstufengetriebes mit (negativer) Eingangsdrehzahl n der Antriebswelle 1 (i_ST1 = -1,0) und das ausgangsseitige Stirnrad S22 der zweiten Stirnradstufe ST2 (Drehzahl n2) mit (negativer) halber Eingangsdrehzahl n der Antriebswelle 1 (i_ST2 = - 2,0). In anderen Ausbildungen des Vorschaltsatzes können selbstverständlich auch andere Übersetzungsverhältnisse der beiden Stirnradstufen ST1, ST2 vorgesehen sein.

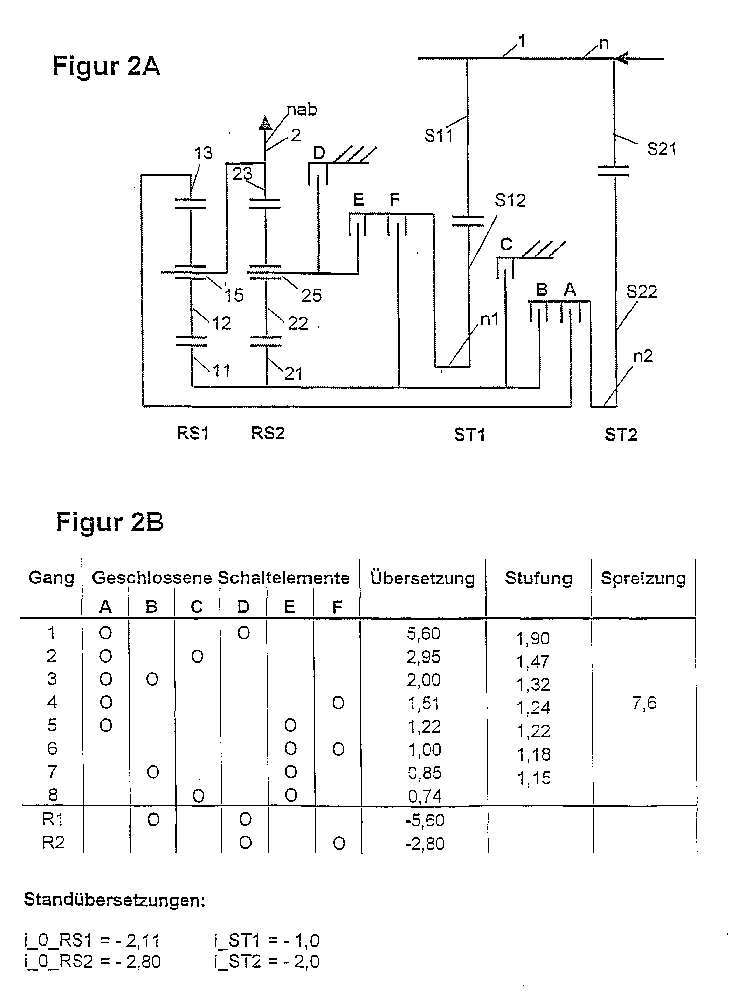

Anhand der Figuren 2A und 2B wird nun eine zweite beispielhafte Ausführungsform eines erfindungsgemäßen Mehrstufengetriebes erläutert. Figur 2A zeigt das Getriebeschema dieser zweiten Ausführungsform. Im Unterschied zu der zuvor beschriebenen ersten Ausführungsform ist lediglich die Koppelung der Radsatzkomponenten des Hauptradsatz und deren Anbindung an die einzelnen Schaltelemente modifiziert. In Figur 2B sind Schaltlogik und beispielhafte Standübersetzungen und Gangstufen der zweiten Ausführungsform dargestellt, die entsprechend den genannten Modifikationen gegenüber der ersten Ausführungsform identisch sind zur Darstellung in Figur 1B.

Wie in Figur 2A dargestellt, wird die erste freie Welle des als Zweisteg-Vierwellen-Getriebes ausgebildeten Hauptradsatzes weiterhin durch ein Zentralrad des ersten Planetenradsatzes RS1 gebildet, nunmehr aber durch dessen Hohlrad 13. Das Hohlrad 13 des ersten Planetenradsatzes RS1 ist also über die Kupplung A mit dem ausgangsseitigen Stirnrad S22 (Drehzahl n2) des zweiten Stirntriebs ST2 verbindbar. Die zweite freie Welle des Hauptradsatzes wird nunmehr durch die beiden gekoppelten Sonnenräder 11, 21 der Planetenradsätze RS1, RS2 gebildet und ist über die Kupplung B mit dem ausgangsseitigen Stirnrad S22 (Drehzahl n2) der zweiten Stirnradstufe ST2, sowie über die Kupplung F mit dem ausgangsseitigen Stirnrad S12 (Drehzahl n1) der ersten Stirnradstufe ST1 verbindbar. Die dritte freie Welle des Hauptradsatzes wird nunmehr alleine durch den Steg 25 mit den Planetenrädern 22 des zweiten Planetenradsatzes RS gebildet und ist unverändert über die Bremse D festsetzbar, sowie über die Kupplung E mit dem ausgangsseitigen Stirnrad S12 (Drehzahl n1) der ersten Stirnradstufe ST1 verbindbar.

Gegenüber der beschriebenen ersten Ausführungsform ist bei der zweiten Ausführungsform eines erfindungsgemäßen Mehrstufengetriebes der Hauptradsatz durch die Bauteilekoppelung der beiden Sonnenräder 11, 12 fertigungstechnisch günstiger.

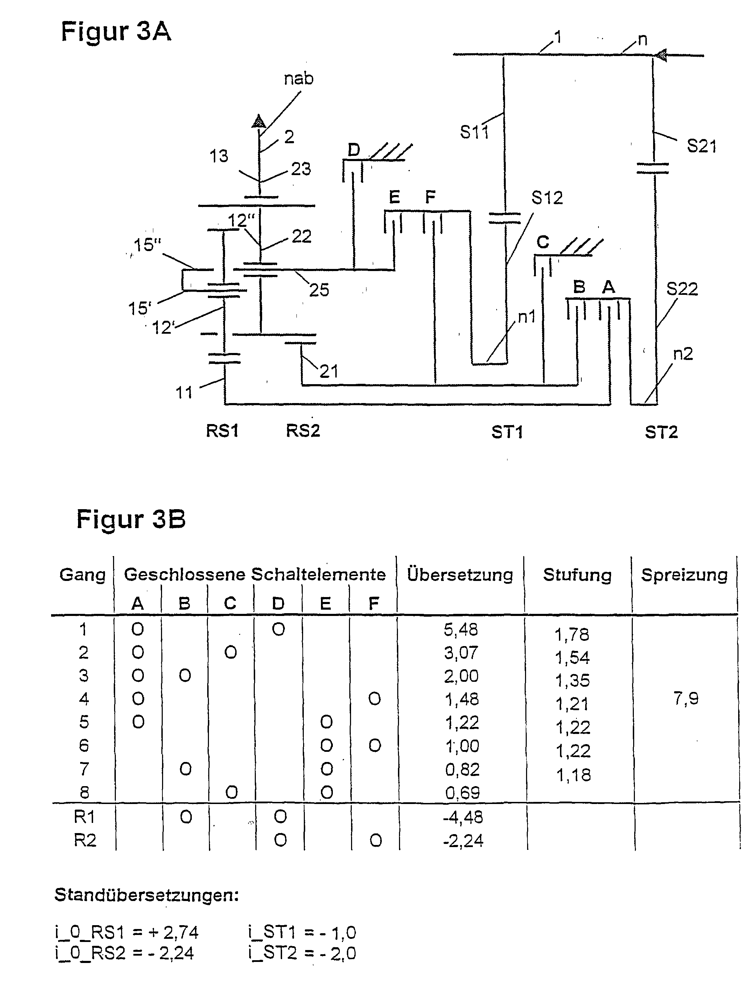

Figur 3A stellt nun das Getriebeschema einer dritten Ausführungsform eines erfindungsgemäßen Mehrstufengetriebes dar. Im Unterschied zu den zuvor beschriebenen Ausführungsformen eins und zwei ist der Hauptradsatz nunmehr als Ravigneux-Radsatz ausgebildet, mit den bekannten Vorteilen hinsichtlich Bauraum.

Wie in Figur 3A dargestellt ist der erste Planetenradsatz RS1 als Plus-Getriebe ausgebildet und weist zwei gekoppelte Stege 15', 15'' mit inneren Planetenrädern 12' und äußeren Planetenrädern 12'' auf. Diese gekoppelten Stege 15', 15'' sind als erste Koppelung innerhalb des Hauptradsatzes mit dem Steg 25 der Planetenräder 22 des zweiten Planetenradsatzes RS2 verbunden, wobei die äußeren Planetenräder 12' des ersten Planetenradsatzes RS1 und die Planetenräder 22 des zweiten Planetenradsatzes RS2 zusammengefaßt sind. Die Hohlräder 13 und 23 beider Planetenradsätze RS1, RS2 sind folglich ebenfalls zusammengefaßt und bilden die zweite Koppelung innerhalb des Hauptradsatzes.

Die Anbindung der freien Wellen des Ravigneux-Radsatzes an die beiden Stirnradstufen ST1 und ST2 entspricht der in Figur 1A. Die Ausgangsdrehzahl n2 der zweiten Stirnradstufe ST2 ist also über die Kupplung A mit dem Sonnenrad 11 des ersten Planetenradsatzes RS1 (als ein Zentralrad des ersten Planetenradsatzes RS1) und über die Kupplung B mit dem Sonnenrad 21 des zweiten Planetenradsatzes RS2 (als ein Zentralrad des zweiten Planetenradsatzes RS2) verbindbar. Weiterhin ist die Ausgangsdrehzahl n1 der ersten Stirnradstufe ST1 über die Kupplung E mit den gekoppelten Stegen 15', 15'', 25 der beiden Planetenradsätze RS1, RS2 und erfindungsgemäß über die Kupplung F zusätzlich mit dem Sonnenrad 21 des zweiten Planetenradsatzes RS2 (als ein Zentralrad des zweiten Planetenradsatzes RS2) verbindbar. Unverändert sind das Sonnenrad 21 über die Bremse C und die gekoppelten Stege 15', 15'', 25 über die Bremse D festsetzbar.

In Figur 2B sind Schaltlogik und beispielhafte Standübersetzungen und Gangstufen der dritten Ausführungsform dargestellt. Gegenüber den zuvor beschrieben Ausführungsformen eins und zwei zeigen die Übersetzungen der einzelnen Gänge geringfügige Abweichungen, die Spreizung ist etwas größer.

Selbstverständlich können auch andere Planentenradsatzkombinationen innerhalb des Hauptradsatzes vorgesehen sein, bei denen beispielsweise die erste oder die zweite Welle des als Zweisteg-Vierwellen-Getriebes ausgebildeten Hauptradsatzes durch einen Steg des ersten oder zweiten Planetenradsatzes RS1 bzw. RS2 gebildet wird.

In einer anderen Ausbildung eines erfindungsgemäßen Mehrstufengetriebes können im Hauptradsatzes auch drei gekoppelte, schaltbare Planetenradsätzes vorgesehen sein, wobei es - je nach Koppelung dieser drei Planetenradsätze - zweckmäßig sein kann, eine dritte Stirnradstufe vorzusehen, die eingangsseitig fest mit der Antriebswelle verbunden ist und eine dritte Ausgangsdrehzahl erzeugt, welche zusätzlich auf den Hauptradsatz übertragbar ist. Auf diese Weise können kompakte vielgängige Mehrstufengetriebe mit vergleichsweise geringer axialen Erstreckung dargestellt werden.

In einer anderen Ausbildung eines erfindungsgemäßen Mehrstufengetriebes kann auch vorgesehen sein, dem als Zweisteg-Vierwellen-Getriebe ausgebildeten Hauptradsatz einen Nachschaltsatz nachzuschalten. Dieser Nachschaltsatz kann nicht schaltbar oder über mindestens ein zusätzliches Schaltelement schaltbar sein und aus einem Nachschalt-Planetenradsatz oder aus mehreren gekoppelten Nachschalt-Planetenradsätzen gebildet werden.

### Bezugszeichen

- 1: Antriebswelle
- 2: Abtriebswelle

- 11: Sonnenrad des ersten Planetenradsatzes
- 12: Planetenrad des ersten Planetenradsatzes
- 13: Hohlrad des des,ersten Planetenradsatzes
- 15: Steg des des ersten Planetenradsatzes

- 21: Sonnenrad des zweiten Planetenradsatzes
- 22: Planetenrad des zweiten Planetenradsatzes
- 23: Hohlrad des zweiten Planetenradsatzes
- 25: Steg des zweiten Planetenradsatzes

- A, B, C, D, E, F: erstes bis sechstes Schaltelement

- RS1: erster Planetenradsatz des Haupradsatzes
- RS2: zweiter Planetenradsatz des Haupradsatzes

- ST1: erste Stirnradstufe des Vorschaltsatzes
- ST2: zweite Stirnradstufe des Vorschaltsatzes

- S11: eingangsseitiges Stirnrad der ersten Stirnradstufe
- S12: ausgangsseitiges Stirnrad der ersten Stirnradstufe
- S21: eingangsseitiges Stirnrad der zweiten Stirnradstufe
- S22: ausgangsseitiges Stirnrad der zweiten Stirnradstufe

- i_ST1: Übersetzungsverhältnis der ersten Stirnradstufe
- i_ST2: Übersetzungsverhältnis der zweiten Stirnradstufe

- n: Drehzahl der Antriebswelle
- nab: Drehzahl der Abtriebswelle
- n1: Ausgangsdrehzahl der ersten Stirnradstufe
- n2: Ausgangsdrehzahl der zweiten Stirnradstufe

## Patentansprüche

1. Mehrstufengetriebe, mit einer Antriebswelle (1) und einer zu dieser nicht koaxialen Abtriebswelle (2), mit zwei Stirnradstufen (ST1, ST2), die eingangsseitig fest mit der mit einer Eingangsdrehzahl (n) rotierenden Antriebswelle (1) verbunden sind und zwei Ausgangsdrehzahlen (n1, n2) erzeugen, mit einem Hauptradsatz, der mit der Abtriebswelle (2) verbunden ist und als Zweisteg-Vierwellen-Getriebe ausgebildet ist mit zwei gekoppelten, schaltbaren Planetenradsätzen (RS1, RS2), auf welche die Ausgangsdrehzahlen (n1, n2) der Stirnradstufen (ST1, ST2) über mehrere Schaltelemente (A bis E) durch deren, selektives Schließen zur Schaltung von mindestens sechs Vorwärtsgängen derart übertragbar sind, daß zum Umschalten von einem Gang in den nächstfolgend höheren oder nächstfolgend niedrigeren Gang von den gerade betätigten Schaltelementen jeweils nur ein Schaltelement abgeschaltet und ein weiteres Schaltelement zugeschaltet wird, wobei die Ausgangsdrehzahl (n2) der zweiten Stirnradstufe (ST2) über ein erstes Schaltelement (A) auf eine erste Welle des Hauptradsatzes und über ein zweites Schaltelement (B) auf eine zweite Welle des Hauptradsatzes übertragbar ist, und wobei die Ausgangsdrehzahl (n1) der ersten Stirnradstufe (ST1) über ein fünftes Schaltelement (E) auf eine dritte Welle des Hauptradsatzes übertragbar ist, wobei die zweite Welle des Hauptradsatzes über ein drittes Schaltelement (C) und die dritte Welle des Hauptradsatzes über ein viertes Schaltelement (D) festsetzbar ist, und wobei eine vierte freie Welle des Hauptradsatzes mit der Abtriebswelle (2) verbunden ist, **dadurch gekennzeichnet, daß** insgesamt sechs Schaltelemente (A bis F) vorgesehen sind, daß die Ausgangsdrehzahl (n1) der ersten Stirnradstufe (ST1) zusätzlich über das sechste Schaltelement (F) auf die zweite Welle des Hauptradsatzes übertragbar ist, und daß mindestens acht Vorwärtsgänge und maximal zwei Rückwärtsgänge schaltbar sind.

2. Mehrstufengetriebe nach Anspruch 1, **dadurch gekennzeichnet, daß** die Ausgangsdrehzahl (n1) der ersten Stirnradstufe (ST1) betragsmäßig gleich oder zumindest annährend gleich der Eingangsdrehzahl (n) der Antriebswelle (1) ist.

3. Mehrstufengetriebe nach Anspruch 1, **dadurch gekennzeichnet, daß** die Ausgangsdrehzahl (n2) der zweiten Stirnradstufe (ST2) betragsmäßig halb so groß oder zumindest annähernd halb so groß ist wie die Eingangsdrehzahl (n) der Antriebswelle (1).

4. Mehrstufengetriebe nach Anspruch 1, 2 oder 3, **dadurch gekennzeichnet, daß** die zweite Welle des Hauptradsatzes ein Zentralrad des zweiten Planetenradsatzes (RS2) ist.

5. Mehrstufengetriebe nach Anspruch 1, 2 oder 3, **dadurch gekennzeichnet, daß** die zweite Welle des Hauptradsatzes aus zwei gekoppelten Zentralrädern der beiden Planetenradsätze (RS1, RS2) gebildet ist.

6. Mehrstufengetriebe nach Anspruch 1, 2 oder 3, **dadurch gekennzeichnet, daß** die zweite Welle des Hauptradsatzes aus einem Steg (25) des zweiten Planetenradsatzes (RS2) oder aus gekoppelten Stegen (15, 25) beider Planetenradsätze (RS1, RS2) gebildet ist.

7. Mehrstufengetriebe nach einem oder mehreren der Ansprüche 1 bis 4, **gekennzeichnet durch** folgende Merkmale:
- ein Sonnenrad (11) des ersten Planetenradsatzes (RS1) bildet die erste freie Welle des Hauptradsatzes und ist über das erste Schaltelement (A) mit einem ausgangsseitigen Stirnrad (S22) der zweiten Stirnradstufe (ST2) verbindbar;
- ein Sonnenrad (21) des zweiten Planetenradsatzes (RS2) bildet die zweite freie Welle des Hauptradsatzes und ist über das zweite Schaltelement (B) mit dem ausgangsseitigen Stirnrad (S22) der zweiten Stirnradstufe (ST2) verbindbar, über das dritte Schaltelement (C) festsetzbar, sowie über das sechste Schaltelement (F) mit einem ausgangsseitigen Stirnrad (S12) der ersten Stirnradstufe (ST1) verbindbar;
- ein Hohlrad (13) des ersten Planetenradsatzes (RS1) und ein Steg (25) mit Planetenrädern (22) des zweiten Planetenradsatzes (RS2) sind gekoppelt und bilden die dritte freie Welle des Hauptradsatzes, sind über das vierte Schaltelement (D) festsetzbar, sowie über das fünfte Schaltelement (E) mit dem ausgangsseitigen Stirnrad (S12) der ersten Stirnradstufe (ST1) verbindbar; und
- ein Hohlrad (23) des zweiten Planetenradsatzes (RS2) und ein Steg (15) mit Planetenrädern (12) des ersten Planetenradsatzes (RS1) sind gekoppelt und bilden die vierte freie Welle des Hauptradsatzes und sind mit der Abtriebswelle (2) verbunden

8. Mehrstufengetriebe nach einem oder mehreren der Ansprüche 1 bis 3, 5, **gekennzeichnet durch** folgende Merkmale:
- ein Hohlrad (13) des ersten Planetenradsatzes (RS1) bildet die erste freie Welle des Hauptradsatzes und ist über das erste Schaltelement (A) mit einem ausgangsseitigen Stirnrad (S22) der zweiten Stirnradstufe (ST2) verbindbar;
- ein Sonnenrad (11) des ersten Planetenradsatzes (RS1) und ein Sonnenrad (21) des zweiten Planetenradsatzes (RS2) sind gekoppelt und bilden die zweite freie Welle des Hauptradsatzes und sind über das zweite Schaltelement (B) mit dem ausgangsseitigen Stirnrad (S22) der zweiten Stirnradstufe (ST2) verbindbar, über das dritte Schaltelement (C) festsetzbar, sowie über das sechste Schaltelement (F) mit einem ausgangsseitigen Stirnrad (S12) der ersten Stirnradstufe (ST1) verbindbar;
- ein Steg (25) mit Planetenrädern (22) des zweiten Planetenradsatzes (RS2) bildet die dritte freie Welle des Hauptradsatzes und ist über das vierte Schaltelement (D) festsetzbar, sowie über das fünfte Schaltelement (E) mit dem ausgangsseitigen Stirnrad (S12) der ersten Stirnradstufe (ST1) verbindbar; und
- ein Hohlrad (23) des zweiten Planetenradsatzes (RS2) und ein Steg (15) mit Planetenrädern (12) des ersten Planetenradsatzes (RS1) sind gekoppelt und bilden die vierte freie Welle des Hauptradsatzes und sind mit der Abtriebswelle (2) verbunden

9. Mehrstufengetriebe nach einem oder mehreren der Ansprüche 1 bis 4, **gekennzeichnet durch** folgende Merkmale:
- ein Sonnenrad (11) des ersten Planetenradsatzes (RS1) bildet die erste freie Welle des Hauptradsatzes und ist über das erste Schaltelement (A) mit einem ausgangsseitigen Stirnrad (S22) der zweiten Stirnradstufe (ST2) verbindbar;
- ein Sonnenrad (21) des zweiten Planetenradsatzes (RS2) bildet die zweite freie Welle des Hauptradsatzes und ist über das zweite Schaltelement (B) mit dem ausgangsseitigen Stirnrad (S22) der zweiten Stirnradstufe (ST2) verbindbar, über das dritte Schaltelement (C) festsetzbar, sowie über das sechste Schaltelement (F) mit einem ausgangsseitigen Stirnrad (S12) der ersten Stirnradstufe (ST1) verbindbar;
- zwei gekoppelte Stege (15', 15'') mit inneren und äußeren Planetenrädern (12', 12'') des ersten Planetenradsatzes (RS1) und ein Steg (25) mit Planetenrädern (22) des zweiten Planetenradsatzes (RS2) sind gekoppelt und bilden die dritte freie Welle des Hauptradsatzes, sind über das vierte Schaltelement (D) festsetzbar, sowie über das fünfte Schaltelement (E) mit dem ausgangsseitigen Stirnrad (S12) der ersten Stirnradstufe (ST1) verbindbar, wobei die äußeren Planetenräder (12'') des ersten Planetenradsatzes (RS1) und die Planetenräder (22) des zweiten Planetenradsatzes (RS2) zusammengefaßt sind;
- ein Hohlrad (13) des ersten Planetenradsatzes (RS1) und ein Hohlrad (23) des zweiten Planetenradsatzes (RS2) sind zusammengefaßt und bilden die vierte freie Welle des Hauptradsatzes und sind mit der Abtriebswelle (2) verbunden

10. Mehrstufengetriebe nach einem oder mehreren der vorigen Ansprüche, **dadurch gekennzeichnet, daß** dem Hauptradsatz ein nicht schaltbarer oder über mindestens ein zusätzliches Schaltelement schaltbarer Nachschaltsatz nachgeschaltet ist, mit einem Nachschalt-Planetenradsatz oder mehreren gekoppelten Nachschalt-Planetenradsätzen.

## Claims

1. Multistep reduction gear with a drive shaft (1), and with an output shaft (2) in non-coaxial arrangement relative to the former; with two spur-gear stages (ST1, ST2), which on the input end are firmly linked to a drive shaft (1) rotating at an input speed (n) and which generate two output speeds (n1, n2); with a main gear set, which is linked to the output shaft (2) and is designed as a dual-spider four-shaft transmission with two coupled, engaging and disengaging planetary gear sets (RS1, RS2), onto which - via several shifting components (A through E)) and through their selective engagement - the output speeds (n1, n2) of the spur-gear stages (ST1, ST2) are transmittable for a minimum of six forward speeds to be shifted in such a way that shifting one gear up or down in each case results in only one of the shifting components actuated being disengaged and another one being engaged, with the output speed (n2) of the second spur-gear stage (ST2) being transmittable via a first shifting component (A) to a first shaft of the main gear set and via a second shifting component (B) to a second shaft of the main gear set, and with the output speed (n1) of the first spur-gear stage (ST1) being transmittable via a fifth shifting component (E) to a third shaft of the main gear set, with the second shaft of the main gear set being fixable via a third shifting component (C) and the third shaft of the main gear set being fixable via a fourth shifting component (D), and with a fourth free shaft of the main gear set being linked to the output shaft (2), **characterized in that** a total of six shifting components (A through F) are provided, that the output speed (n1) of the first spur-gear stage (ST1) is also transmittable via the sixth shifting component (F) to the second shaft of the main gear set, and that at least eight forward and maximally two reverse gears can be shifted.

2. Multistep reduction gear according to claim 1, **characterized in that** the output speed (n1) of the first spur-gear stage (ST1) is equivalent or at least approximately equivalent to the input speed (n) of the drive shaft (1).

3. Multistep reduction gear according to claim 1, **characterized in that** the output speed (n2) of the second spur-gear stage (ST2) is equivalent to half or at least approximately half that of the input speed (n) of the drive shaft (1).

4. Multistep reduction gear according to claim 1, 2, or 3, **characterized in that** the second shaft of the main gear set is a center gear of the second planetary gear set (RS2).

5. Multistep reduction gear according to claim 1, 2, or 3, **characterized in that** the second shaft of the main gear set is composed of two linked center gears of the two planetary gear sets (RS1, RS2).

6. Multistep reduction gear according to claim 1, 2, or 3, **characterized in that** the second shaft of the main gear set is composed of a spider (25) of the second planetary gear set (RS2) or of linked spiders (15, 25) of both planetary gear sets (RS1, RS2).

7. Multistep reduction gear according to one or several of the claims 1 through 4,
**characterized by** the following features:
- a center gear (11) of the first planetary gear set (RS1) constitutes the first free shaft of the main gear set and can be connected via the first shifting component (A) with an output-related spur gear (S22) of the second spur-gear stage (ST2);
- a center gear (21) of the second planetary gear set (RS2) constitutes the second free shaft of the main gear set and can be connected via the second shifting component (B) with the output-related spur gear (S22) of the second spur-gear stage (ST 2); it can be fixed via the third shifting component (C) and it can be connected via the sixth shifting component (F) with an output-related spur gear (S12) of the first spur-gear stage (ST1);
- an internal gear (13) of the first planetary gear set (RS1) and a spider (25) with planetary gears (22) of the second planetary gear set (RS2) are linked and constitute the third free shaft of the main gear set; they can be fixed via the fourth shifting component (D) and they can be connected via the fifth shifting component (E) with the output-related spur gear (S12) of the first spur-gear stage (ST1);
- an internal gear (23) of the second planetary gear set (RS2) and a spider (15) with planetary gears (12) of the first planetary gear set (RS1) are linked and constitute the fourth free shaft of the main gear set and are linked to the output shaft (2).

8. Multistep reduction gear according to one or several of the claims 1 through 3 and 5, **characterized by** the following features:
- an internal gear (13) of the first planetary gear set (RS1) constitutes the first free shaft of the main gear set and can be connected via the first shifting component (A) with an output-related spur gear (S22) of the second spur-gear stage (ST2);
- a center gear (11) of the first planetary gear set (RS1) and a center gear (21) of the second planetary gear set (RS2) are linked and constitute the second free shaft of the main gear set and can be connected via the second shifting component (B) with the output-related spur gear (S22) of the second spur-gear stage (ST2); they can be fixed via the third shifting component (C) and they can be connected via the sixth shifting component (F) with an output-related spur gear (S12) of the first spur-gear stage (ST1);
- a spider (25) with planetary gears (22) of the second planetary gear set (RS2) constitutes the third free shaft of the main gear set and can be fixed via the fourth shifting component (D) and linked via the fifth shifting component (E) with the output-related spur gear (S12) of the first spur-gear stage (ST1);
- an internal gear (23) of the second planetary gear set (RS2) and a spider (15) with planetary gears (12) of the first planetary gear set (RS1) are linked and constitute the fourth free shaft of the main gear set and are linked to the output shaft (2).

9. Multistep reduction gear according to one or several of the claims 1 through 4, **characterized by** the following features:
- a center gear (11) of the first planetary gear set (RS1) constitutes the first free shaft of the main gear set and via the first shifting component (A) can be linked with an output-related spur gear ((S22) of the second spur-gear stage (ST2);
- a center gear (21) of the second planetary gear set (RS2) constitutes the second free shaft of the main gear set and via the second shifting component (B) can be linked with the output-related spur gear (S22) of the second spur-gear set (ST2); it can be fixed via the third shifting component (C) and linked via the sixth shifting component (F) with an output-related spur gear (S12) of the first spur-gear set (ST1);
- two linked spiders (15', 15") with inner and outer planetary gears (12', 12'') of the first planetary gear set (RS1) and a spider (25) with planetary gears (22) of the second planetary gear set (RS2) are linked and constitute the third free shaft of the main gear set; they can be fixed via the fourth shifting component (D) and linked via the fifth shifting component (E) with the output-related spur gear (S12) of the first spur-gear stage (ST1), with the outer planetary gears (12") of the first planetary gear set (RS1) and the planetary gears (22) of the second planetary gear set (RS2) being combined;
- an internal gear (13) of the first planetary gear set (RS1) and an internal gear (23) of the second planetary gear set (RS2) are combined and constitute the fourth free shaft of the main gear set and are linked with the output shaft (2).

10. Multistep reduction gear according to one or several of the preceding claims, **characterized in that** secondary to the main gear set there is a rear-mounted range unit comprising a secondary planetary gear set or several linked secondary planetary gear sets, which is not shiftable or is shiftable by means of at least one additional shifting component.

## Revendications

1. Transmission à plusieurs étages comprenant un arbre d'entrée (1) et un arbre de sortie (2) qui n'est pas coaxial au premier, deux étages de roues droites (ST1, ST2) qui sont reliés rigidement, côté entrée, à l'arbre d'entrée (1) qui tourne avec une vitesse de rotation d'entrée (n), et qui produisent deux vitesses de rotation de sortie (n1, n2), un train de roues principal qui est relié à l'arbre de sortie (2) et forme une transmission à deux porte-satellites-quatre arbres possédant deux trains épicycloïdaux accouplés (RS1, RS2) pouvant être commutés, auxquels les vitesses de rotation de sortie (n1, n2) des étages de roues droites (ST1, ST2) peuvent être transmises par l'intermédiaire de plusieurs éléments de commutation (A à E), par la fermeture sélective de ces éléments, pour enclencher au moins six vitesses de marche avant, de telle manière que, pour commuter d'une vitesse à la suivante, plus élevée, ou à la vitesse suivante, plus basse, parmi les éléments de commutation qui sont actionnés à ce moment, seul un élément de commutation est mis hors d'action et un autre élément de commutation est mis en action, la vitesse de rotation de sortie (n2) du deuxième étage de roues droites (ST2) pouvant être transmise, par l'intermédiaire d'un premier élément de commutation (A), à un premier arbre du train de roues principal et, par l'intermédiaire d'un deuxième élément de commutation (B), à un deuxième arbre du train de roues principal, et la vitesse de rotation de sortie (n1) du premier étage de roues droites (ST1) pouvant être transmise, par l'intermédiaire d'un cinquième élément de commutation (E), à un troisième arbre du train de roues principal, le deuxième arbre du train de roues principal pouvant être immobilisé par l'intermédiaire d'un troisième élément de commutation (C) et le troisième arbre du train de roues principal pouvant être immobilisé par l'intermédiaire d'un quatrième élément de commutation (D), et un quatrième arbre libre du train de roues principal étant relié à l'arbre de sortie (2), **caractérisée en ce qu'**il est prévu au total six éléments de commutation (A à F), que la vitesse de rotation de sortie (n1) du premier étage de roues droites (ST1) peut être en supplément transmise par l'intermédiaire du sixième élément de commutation (F) au deuxième arbre du train de roues principal et **en ce qu'**il est possible d'enclencher au moins huit vitesses de marche avant et au maximum deux vitesses de marche arrière.

2. Transmission à plusieurs étages selon la revendication 1, **caractérisée en ce que** la vitesse de rotation de sortie (n1) du premier étage de roues droites (ST1) est égale ou au moins à peu près égale en valeur absolue à la vitesse de rotation d'entrée (n) de l'arbre d'entrée (1).

3. Transmission à plusieurs étages selon la revendication 1, **caractérisée en ce que** la vitesse de rotation de sortie (n2) du deuxième étage de roues droites (ST2) est égale ou du moins à peu près égale à la moitié, en valeur absolue, de la vitesse de rotation d'entrée (n) de l'arbre d'entrée (1).

4. Transmission à plusieurs étages selon la revendication 1, 2 ou 3, **caractérisée en ce que** le deuxième arbre du train de roues principal est une roue planétaire du deuxième train de roues épicycloïdal (RS2).

5. Transmission à plusieurs étages selon la revendication 1, 2 ou 3, **caractérisée en ce que** le deuxième arbre du train de roues principal est composé de deux roues planétaires accouplées appartenant aux deux trains épicycloïdaux (RS1, RS2).

6. Transmission à plusieurs étages selon la revendication 1, 2 ou 3, **caractérisée en ce que** le deuxième arbre du train de roues principal est formé par un porte-satellites (25) du deuxième train de roues épicycloïdal (RS2), ou par des porte-satellites accouplés (15, 25) des deux trains épicycloïdaux (RS1, RS2).

7. Transmission à plusieurs étages selon une ou plusieurs des revendications 1 à 4, **caractérisée par** les éléments suivants :
- une roue planétaire (11) du premier train de roues épicycloïdal (RS1) forme le premier arbre libre du train de roues principal et peut être relié par l'intermédiaire du premier élément de commutation (A) à une roue droite côté sortie (S22) du deuxième étage de roues droites (ST2) ;
- une roue planétaire (21) du deuxième train de roues épicycloïdal (RS2) forme le deuxième arbre libre du train de roues principal et peut être reliée par l'intermédiaire du deuxième élément de commutation (B) à la roue droite côté sortie (S22) du deuxième étage de roues droite (ST2), et peut être immobilisée par l'intermédiaire du troisième élément de commutation (C), de même qu'elle peut être reliée par l'intermédiaire du sixième élément de commutation (F) à une roue droite côté sortie (S12) du premier étage de roues droite (ST1) ;
- une couronne à denture intérieure (13) du premier train de roues épicycloïdal (RS1) et un porte-satellite (25) portant des roues satellites (22) du deuxième train de roues épicycloïdal (RS2) sont accouplés et forment le troisième arbre libre du train de roues principal, peuvent être immobilisés par l'intermédiaire du quatrième élément de commutation (D), de même qu'ils peuvent être reliés par l'intermédiaire du cinquième élément de commutation (E) à la roue droite côté sortie (S12) du premier étage de roues droites (ST1) ; et
- une couronne à denture intérieure (23) du deuxième train de roues épicycloïdal (RS2) et un porte-satellite (15) portant des roues satellites (12) du premier train de roues épicycloïdal (RS1) sont accouplés et forment le quatrième arbre libre du train de roues principal et sont reliés à l'arbre de sortie (2).

8. Transmission à plusieurs étages selon une ou plusieurs des revendications 1 à 3, 5, **caractérisée par** les éléments suivants :
- une couronne à denture intérieure (13) du premier train de roues épicycloïdal (RS1) forme le premier arbre libre du train de roues principal et peut être reliée par l'intermédiaire du premier élément de commutation (A) à une roue droite côté sortie (S22) du deuxième étage de roues droites (ST2) ;
- une roue planétaire (11) du premier train de roues épicycloïdal (RS1) et une roue planétaire (21) du deuxième train de roues épicycloïdal (RS2) sont accouplées et forment le deuxième arbre libre du train de roues principal et peuvent être reliées par l'intermédiaire du deuxième élément de commutation (B) à la roue droite côté sortie (S22) du deuxième étage de roues droites (ST2), peuvent être immobilisées par l'intermédiaire du troisième élément de commutation (C), de même qu'elles peuvent être reliées par l'intermédiaire du sixième élément de commutation (F) à une roue droite côté sortie (S12) du premier étage de roues droites (ST1) ;
- un porte-satellites (25) portant des roues satellites (22) du deuxième train de roues épicycloïdal (RS2) forme le troisième arbre libre du train de roues principal et peut être immobilisé par l'intermédiaire du quatrième élément de commutation (D) de même qu'il peut être relié par l'intermédiaire du cinquième élément de commutation (E) à la roue droite côté sortie (S12) du premier étage de roues droites (ST1) ; et
- une couronne à denture intérieure (23) du deuxième train de roues épicycloïdal (RS2) et un porte-satellites (15) portant des roues satellites (12) du premier train de roues épicycloïdal (RS1) sont accouplés et forment le quatrième arbre libre du train de roues principal et sont reliés à l'arbre de sortie (2).

9. Transmission à plusieurs étages selon une ou plusieurs des revendications 1 à 4, **caractérisée par** les éléments suivants :
- une roue planétaire (11) du premier train de roues épicycloïdal (RS1) forme le premier arbre libre du train de roues principal et peut être reliée par l'intermédiaire du premier élément de commutation (A) à une roue droite côté sortie (S22) du deuxième étage de roues droites (ST2) ;
- une roue planétaire (21) du deuxième train de roues épicycloïdal (RS2) forme le deuxième arbre libre du train de roues principal et peut être reliée par l'intermédiaire du deuxième élément de commutation (B) à la roue droite côté sortie (S22) du deuxième étage de roues droites (ST2), peut être immobilisée par l'intermédiaire du troisième élément de commutation (C), de même qu'elle peut être reliée par l'intermédiaire du sixième élément de commutation (F) à une roue droite côté sortie (S12) du premier étage de roues droites (ST1) ;
- deux porte-satellites accouplés (15', 15") portant des roues satellites intérieures et extérieures (12', 12") du premier train de roues épicycloïdal (RS1) et un porte-satellites (25) portant des roues satellites (22) du deuxième train de roues épicycloïdal (RS2) sont accouplés et forment le troisième arbre libre du train de roues principal, peuvent être immobilisés par l'intermédiaire du quatrième élément de commutation (D) de même qu'ils peuvent être reliés par l'intermédiaire du cinquième élément de commutation (E) à la roue droite côté sortie (S12) du premier étage de roues droites (ST1), les roues satellites extérieures (12") du premier train de roues épicycloïdal (RS1) et les roues satellites (22) du deuxième train de roues épicycloïdal (RS2) sont réunies ;
- une couronne à denture intérieure (13) du premier train de roues épicycloïdal (RS1) et une couronne à denture intérieure (23) du deuxième train de roues épicycloïdal (RS2) sont réunies et forment le quatrième arbre libre du train de roues principal et sont reliées à l'arbre de sortie (2).

10. Transmission à plusieurs étages selon une ou plusieurs des revendications précédentes, **caractérisée en ce qu'**en aval du train de roues principal, est placé un train aval, non commutable ou encore commutable par l'intermédiaire d'au moins un élément de commutation supplémentaire, ce train étant muni d'un train de roues épicycloïdal aval ou de plusieurs trains épicycloïdaux aval accouplés.
